# EUROPEAN PATENT APPLICATION

(11) **EP 4 847 301 A1**
(43) Date of publication of application: **02.12.2026**
(21) Application number: 26181781.1
(22) Date of filing: 28.05.2026
(51) Int. Cl.: B60L 53/31, B60L 53/16, B60L 53/18, B60L 53/30, F21V 33/00, H02J 7/00, H05B 45/20

(54) **CHARGING DEVICE**

(30) Priority: 30.05.2025 CN 202521113491 U
(71) Applicant: Huawei Technologies Co., Ltd., Shenzhen, Guangdong 518129 (CN)
(72) Inventor: LIAN, Zhisheng, Shenzhen, 518129 (CN); LI, Zheng, Shenzhen, 518129 (CN); YE, Pengcheng, Shenzhen, 518129 (CN); YAN, Peilin, Shenzhen, 518129 (CN)
(74) Representative: Gill Jennings & Every LLP

(57) **Abstract**

Embodiments of this application provide a charging device, and relate to the field of charging technologies. The charging device includes a device cabinet, at least one charging connector, at least one cable, a management assembly, and a light source. The at least one charging connector is located outside the device cabinet. A part of each cable is located in the device cabinet, and the other part of each cable is located outside the device cabinet and is connected to one charging connector. The management assembly includes a mounting base and at least one movable member. The mounting base is fastened to the top of the device cabinet. The at least one movable member is connected to the mounting base and is movable relative to the mounting base. Each movable member is connected to one charging connector or one cable. The light source is fastened to the mounting base.

## Description

### TECHNICAL FIELD

This application relates to the field of charging technologies, and in particular, to a charging device.

### BACKGROUND

With popularization of electric vehicles, demand for charging devices in society is increasing. Therefore, a charging device not only needs to charge a to-be-charged apparatus (for example, an electric vehicle), but also needs to provide better experience for a user throughout a charging process, so that the user can perform a charging operation more comfortably.

In related technologies, in some usage scenarios of the charging device, particularly in low-light scenarios, the user cannot quickly locate the charging device or conveniently use the charging device (for example, inserting or removing a charging connector), consequently affecting operation efficiency and user experience of the user.

### SUMMARY

This application provides a charging device. A light source on the charging device can provide illumination and guidance, thereby improving operation efficiency and user experience of a user.

This application provides a charging device. The charging device includes a device cabinet, at least one charging connector, at least one cable, a management assembly, and a light source. The at least one charging connector is located outside the device cabinet. A part of each cable is located in the device cabinet, and the other part of each cable is located outside the device cabinet and is connected to one charging connector. The management assembly includes a mounting base and at least one movable member. The mounting base is fastened to the top of the device cabinet. The at least one movable member is connected to the mounting base and is movable relative to the mounting base. Each movable member is connected to one charging connector or one cable. The light source is fastened to the mounting base.

The device cabinet is mounted in a specified area, and a current is transmitted to the charging connector through the cable, so that the charging connector can charge a to-be-charged apparatus (for example, an electric vehicle). The movable member of the management assembly is connected to the charging connector or the cable, so that the management assembly lifts the charging connector or the cable. In other words, the management assembly can bear a part of weight of the charging connector and the cable. This helps a user use the charging connector for charging and conveniently move the cable. In addition, the management assembly can further lift the cable, thereby reducing a possibility of the cable being in contact with a ground and increasing a service life of the cable. The management assembly is disposed at the top of the device cabinet, and the light source is disposed on the management assembly, so that a position of the light source is higher. The light source can illuminate an area in which the device cabinet is located to some extent, to achieve illumination effect, making it convenient for the user to perform a charging operation (for example, inserting or removing the charging connector) by using the charging connector. In addition, light emitted by the light source can make the user aware of presence of the device cabinet of the charging device, visually guiding and attracting the user, making it convenient for the user to quickly find the device cabinet and use the charging connector in the device cabinet for charging. In conclusion, the light source at a higher position can provide illumination and guidance, particularly in a low-light scenario, thereby improving operation efficiency and user experience of the user.

In an embodiment of this application, the charging device further includes a controller. The controller is fastened to the device cabinet or the management assembly. In a first time period, the controller is configured to control the light source to emit light. In a second time period, the controller is configured to control the light source to stop emitting light.

The controller can control turn-on and turn-off of the light source, so that the light source emits light in a required time period and stops emitting light in an unrequired time period. For example, the first time period is nighttime, and because ambient light is dim in nighttime, the controller needs to turn on the light source to emit light, to achieve illumination and guidance effect. For another example, the second time period is in daytime, and because ambient light is sufficient in daytime, the light source is turned off, to save energy.

In an embodiment of this application, the charging device further includes a charging connector holder and a controller. The charging connector holder is fastened to the device cabinet or located outside the device cabinet. The charging connector holder is configured to accommodate the charging connector. The controller is fastened to the device cabinet or the management assembly. When any charging connector is mounted in the charging connector holder, the controller is configured to control the light source to emit light, and when all charging connectors are removed from the charging connector holder, the controller is configured to control the light source to stop emitting light. Alternatively, when any charging connector is mounted in the charging connector holder, the controller is configured to control the light source to stop emitting light, and when all charging connectors are removed from the charging connector holder, the controller is configured to control the light source to emit light.

If the charging connector is mounted in the charging connector holder, it indicates that the charging connector is idle. In other words, the charging connector is temporarily not in use, and the user can use the charging connector to charge. If the charging connector is not mounted in the charging connector holder, it indicates that the charging connector is in use. If all charging connectors in the device cabinet are in use, the charging connectors in the device cabinet cannot be used by another user, and the another user needs to find another device cabinet that can be used for charging. To save a time for the user to select the device cabinet, the controller can control the turn-on and the turn-off of the light source, to indicate whether the charging connector in the device cabinet can be used.

For example, if the light source emits light, it indicates that at least one charging connector in the device cabinet is idle, and the user may use the charging connector in the device cabinet to charge; and if the light source stops emitting light, it indicates that all charging connectors in the device cabinet are in use, and the user needs to find another device cabinet. In other words, light emitting of the light source corresponding to the device cabinet indicates that the charging connector in the device cabinet can be used, so that the user can quickly find this kind of device cabinet of this type and use an idle charging connector in the device cabinet, thereby improving user experience.

For another example, if the light source stops emitting light, it indicates that at least one charging connector in the device cabinet is idle; and if the light source emits light, it indicates that all charging connectors in the device cabinet are in use. In other words, the light source emitting light prompts the user to find another device cabinet, thereby saving the time for the user to select the device cabinet.

In an embodiment of this application, the light source is configured to emit first light and second light of different colors. The charging device further includes a charging connector holder and a controller. The charging connector holder is fastened to the device cabinet or located outside the device cabinet. The charging connector holder is configured to accommodate the charging connector. The controller is fastened to the device cabinet or the management assembly. When any charging connector is mounted in the charging connector holder, the controller is configured to control the light source to emit the first light. When all charging connectors are removed from the charging connector holder, the controller is configured to control the light source to emit the second light.

The light source can emit light (the first light and the second light) of different colors. The controller controls a color of the light emitted by the light source to indicate whether the charging connector in the device cabinet can be used, so that the user located farther away can identify a status of the charging connector in the device cabinet, thereby saving a time for the user to select the device cabinet. When the light source emits the first light, it indicates that at least one charging connector in the device cabinet is idle, and the user may use the charging connector in the device cabinet to charge. When the light source emits the second light, it indicates that all charging connectors in the device cabinet are in use, and the user needs to find another device cabinet to use the charging connector in the device cabinet to charge.

In addition, the first light and the second light can also provide illumination to some extent, thereby improving the operation efficiency and user experience of the user in the low-light scenario.

In an embodiment of this application, the light source is further configured to emit third light, and both a color of the first light and a color of the second light are different from a color of the third light. In a first time period, the controller is configured to control the light source to emit the third light. In a second time period, the controller is configured to control the light source to turn off the third light.

The third light emitted by the light source serves as independent illumination light, to illuminate the area in which the device cabinet is located and assist the user in charging. Regardless of whether it is in the first time period or the second time period, both the first light and the second light are selectively emitted based on the status of the charging connector in the device cabinet. In other words, the first light and the second light are not affected by the first time period and the second time period. However, the third light is emitted only in the first time period (for example, in nighttime) to provide enhanced illumination (because the first light and the second light can provide illumination to some extent, the third light enhances illumination). In the second time period (for example, in daytime), the light source does not emit the third light, to save energy. In conclusion, the third light assists the first light and the second light, so that the light source can indicate the status of the charging connector in the device cabinet and also emit light in a required time period, to enhance illumination.

In an embodiment of this application, the light source includes at least one first part and at least one second part. The at least one first part is configured to emit the first light and the second light. The at least one second part is configured to emit the third light.

The light source is divided into the first part and the second part, so that light with different functions is emitted in different areas. The first light and the second light that indicate the status of the charging connector is emitted in the first part, and the third light that enhances illumination is emitted in the second part, so that light with the different functions is emitted in the different areas, thereby reducing a possibility of mutual interference between the light with the different functions, and making effect of each functional light more obvious.

In an embodiment of this application, a plurality of first parts and a plurality of second parts are disposed, and the plurality of first parts and the plurality of second parts are alternately arranged in a circumferential direction of the device cabinet.

The plurality of first parts and the plurality of second parts are alternately arranged in a circumferential direction of the light source, so that the user standing at various positions can see the first light and the second light emitted by the first part, making it convenient for the user to determine whether the charging connector in the device cabinet can be used. In addition, the third light emitted by the second part can illuminate more areas around the device cabinet, thereby improving illumination effect of the light source.

In an embodiment of this application, a plurality of first parts are disposed. The plurality of first parts surround an outer circumference of the at least one second part. An area enclosed by the plurality of first parts faces the device cabinet.

Because the first light and the second light emitted by the first part are used to assist a distant user in determining the status of the charging connector in the device cabinet, the plurality of first parts are located on the outer circumference of the second part, so that the user can see the first light and the second light emitted by the first part from any direction in a case of no obstruction, making it convenient for the user to determine whether the charging connector in the device cabinet can be used. The third light emitted by the second part is used for illumination, and may be disposed on an inner side of the plurality of first parts without affecting illumination effect of the second part.

In an embodiment of this application, the at least one first part is located above the at least one second part.

Because the first light and the second light emitted by the first part are used to assist a distant user in determining the status of the charging connector in the device cabinet, a position of the first part is higher (above the second part), so that a possibility of the user seeing the light emitted by the first part is increased, making it convenient for the user to determine whether the charging connector in the device cabinet can be used. The third light emitted by the second part is used for illumination. Therefore, the second part may be disposed below the first part, so that the second part illuminates downward the area in which the device cabinet is located.

In an embodiment of this application, the at least one first part is located at the top of the mounting base, and the at least one second part is located at the bottom of the mounting base.

The first part is disposed at the top of the mounting base, so that the position of the first part is higher, making it convenient for the user to determine whether the charging connector in the device cabinet can be used. The second part is disposed at the bottom of the mounting base, so that a possibility of the mounting base obstructing the first part is reduced, making it convenient for the second part to illuminate downward the area in which the device cabinet is located.

In an embodiment of this application, the charging device further includes a sensor and the controller. The sensor is fastened to the device cabinet or the management assembly, and the sensor is configured to detect brightness outside the device cabinet. The controller is fastened to the device cabinet or the management assembly, and the controller is configured to control brightness of the light source. When the brightness outside the device cabinet is less than a first brightness threshold, the controller is configured to control the brightness of the light source to decrease. When the brightness outside the device cabinet is greater than a second brightness threshold, the controller is configured to control the brightness of the light source to increase.

The sensor can detect brightness of ambient light outside the device cabinet, and the controller adjusts the brightness of the light source by using a detection result of the sensor. For example, when the brightness of the ambient light becomes dim, that is, when the brightness of the ambient light is less than the first brightness threshold, the brightness of the light source also becomes dim, thereby reducing a possibility of light pollution caused by the light source. For another example, when the brightness of the ambient light becomes bright, that is, when the brightness of the ambient light is greater than the second brightness threshold, the brightness of the light source increases, so that a person can see the light emitted by the light source, visually guiding and attracting the user, making it convenient for the user to quickly find the device cabinet.

In an embodiment of this application, the charging device further includes a light source cover. The light source is located in the light source cover. The bottom of the light source cover has a first light-emitting surface. The first light-emitting surface is configured to allow light emitted by the light source to pass through.

The first light-emitting surface is located at the bottom of the light source cover. The light emitted by the light source can pass through the first light-emitting surface and illuminate an area below the light source cover. In other words, the area in which the device cabinet is located is illuminated, making it convenient for the user to perform a charging operation by using the charging connector. In addition, the area in which the device cabinet is located is illuminated by using the light source, so that the user can be aware of the presence of the device cabinet, visually guiding and attracting the user, making it convenient for the user to quickly find the device cabinet.

In an embodiment of this application, the charging device further includes the light source cover. The light source is located in the light source cover. The light source cover is in a ring shape. An opening enclosed by the light source cover faces the device cabinet. The light source cover has a second light-emitting surface facing away from the opening. The second light-emitting surface is configured to allow the light emitted by the light source to pass through.

The light emitted by the light source can pass through the second light-emitting surface and is emitted outward. The second light-emitting surface located on a side portion of the light source cover can allow the light source to emit the light outward. On a basis of illuminating the area in which the device cabinet is located, this helps guide and attract the user located farther away and also increases a possibility of the light source being seen.

In an embodiment of this application, the charging device further includes the light source cover. The light source is located in the light source cover. The light source cover is in a ring shape. An opening enclosed by the light source cover faces the device cabinet. The light source cover has a second light-emitting surface facing away from the opening. The light source cover has a third light-emitting surface facing the opening. The third light-emitting surface is configured to allow the light emitted by the light source to pass through.

When the light source is in the ring shape, the third light-emitting surface increases a light-emitting area of the light source cover, so that the light emitted by the light source is more visually obvious, and effect of illuminating the area in which the device cabinet is located is better.

In an embodiment of this application, the light source cover is fastened to the bottom of the mounting base, and the first light-emitting surface faces the device cabinet.

The light source cover is fastened to the bottom of the mounting base. When the light source illuminates an area below, the mounting base does not obstruct the first light-emitting surface of the light source, so that the light source can achieve better illumination effect.

In an embodiment of this application, the light source cover is fastened to the top of the mounting base. A part of the light source cover protrudes beyond an outer circumference of the mounting base. The first light-emitting surface is located at a part that is of the light source cover and that protrudes beyond the outer circumference of the mounting base.

The light source cover is fastened to the top of the mounting base, so that a position at which the light source cover is located is higher. This helps guide and attract the user located farther away, making it convenient for the user to quickly find the device cabinet. The light source cover at least partially protrudes beyond the outer circumference of the mounting base, and the first light-emitting surface is located at a part that is of the light source cover and that protrudes beyond the mounting base, so that the mounting base does not obstruct the first light-emitting surface of the light source cover, and the light source can illuminate the area below through the first light-emitting surface, thereby achieving better illumination effect.

In an embodiment of this application, the light source cover is fastened to the top of the mounting base. The mounting base has a light transmission opening. The light transmission opening penetrates the mounting base in an arrangement direction of the mounting base and the device cabinet. At least a part of the light source cover is located at the light transmission opening. A surface that is of the light source cover and that faces the light transmission opening is the first light-emitting surface.

The light transmission opening is a hollow area on the mounting base, and the light emitted by the light source through the first light-emitting surface passes through the light transmission opening. In other words, the light source can illuminate the area below through the light transmission opening, so that the light source achieves better illumination effect.

### BRIEF DESCRIPTION OF DRAWINGS

FIG. 1 is a diagram of a structure of a charging device according to an embodiment of this application;
FIG. 2 is a diagram of a structure of another charging device according to an embodiment of this application;
FIG. 3 is a diagram of a structure of still another charging device according to an embodiment of this application;
FIG. 4 is a diagram of a structure of a light source according to an embodiment of this application;
FIG. 5A and FIG. 5B are diagrams of structures of a plurality of first light-emitting surfaces according to an embodiment of this application;
FIG. 6A and FIG. 6B are diagrams of structures of a plurality of second light-emitting surfaces according to an embodiment of this application;
FIG. 7A and FIG. 7B are diagrams of structures of a plurality of third light-emitting surfaces according to an embodiment of this application;
FIG. 8 is a diagram of a position at which a cross section of a light source cover is obtained by cutting according to an embodiment of this application;
FIG. 9A to FIG. 9C are cross-sectional views of a plurality of light source covers according to an embodiment of this application;
FIG. 10 is a diagram of a structure of another light source according to an embodiment of this application;
FIG. 11 is a diagram of a structure in which a light source cover protrudes beyond an outer circumference of a mounting base according to an embodiment of this application;
FIG. 12 is a diagram of a structure of still another light source according to an embodiment of this application;
FIG. 13 is a diagram of a structure of still another charging device according to an embodiment of this application;
FIG. 14 is a diagram of a structure of still another charging device according to an embodiment of this application;
FIG. 15 is a diagram of structures of a first part and a second part according to an embodiment of this application;
FIG. 16 is a diagram of structures of another first part and another second part according to an embodiment of this application;
FIG. 17 is a diagram of structures of still another first part and still another second part according to an embodiment of this application;
FIG. 18 is a diagram of structures of still another first part and still another second part according to an embodiment of this application;
FIG. 19 is a diagram of structures of still another first part and still another second part according to an embodiment of this application;
FIG. 20A and FIG. 20B are diagrams of a structure of a management assembly according to an embodiment of this application;
FIG. 21 is a diagram of a structure of another management assembly according to an embodiment of this application; and
FIG. 22 is a diagram of a structure of still another management assembly according to an embodiment of this application.

### Reference numerals:

100: charging device; 1: device cabinet; 11: display; 2: power conversion apparatus; 3: alternating current power distribution apparatus; 4: direct current power distribution apparatus; 5: charging connector; 6: cable; 7: main cabinet; 8: power distribution apparatus; 9: management assembly; 91: mounting base; 911: light transmission opening; 92: movable member; 93: driving member; 931: housing; 932: elastic member; 933: connection rope; 934: first link; 935: second link; 94: support base; 10: light source; 111: light source cover; 1111: first segment; 1112: second segment; 110: opening; 101: first light-emitting surface; 1011: first surface; 1012: second surface; 1013: third surface; 102: second light-emitting surface; 103: third light-emitting surface; 104: cross-sectional segment; 105: first part; 106: second part; 20: controller; 30: sensor; 40: charging connector holder; 50: support bracket; 200: power supply; 300: shaded surface.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In this application, the terms "first", "second", and the like are merely intended for a purpose of description, and are intended to distinguish between one element and another element, but shall not be understood as an indication or implication of relative importance or an implicit indication of a quantity of indicated technical features. Therefore, a feature limited by "first", "second", or the like may explicitly or implicitly include one or more features.

In this application, unless otherwise expressly specified and limited, "a plurality of" means two or more.

In addition, in this application, the terms such as "example" or "for example" indicate giving an example, an illustration, or a description. Any embodiment or design scheme described as an "example" or "for example" in this application should not be explained as being more preferred or having more advantages than another embodiment or design scheme. Specifically, use of the term such as "example" or "for example" is intended to present a related concept in a specific manner.

In the accompanying drawings of embodiments of this application, entity structures such as components and assemblies are indicated by guide lines. A structure including a plurality of components is indicated by parentheses or guide lines with solid arrows. Hollow structures such as openings, holes, space, and cavities are indicated by guide lines with hollow arrows.

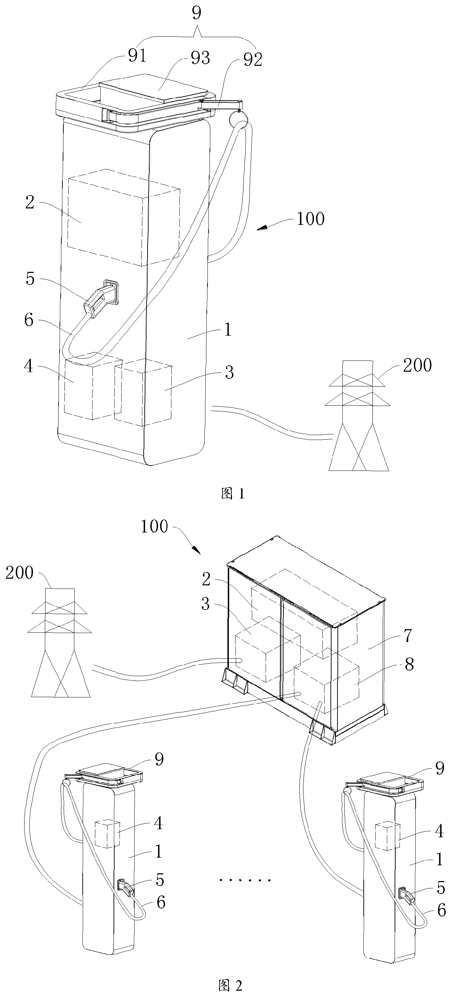

An embodiment of this application provides a charging device 100. FIG. 1 shows an example of a structure of the charging device 100. Refer to FIG. 1. The charging device 100 is an integrated charging pile. The charging device 100 includes a device cabinet 1, a power conversion apparatus 2, an alternating current power distribution apparatus 3, and a direct current power distribution apparatus 4. The power conversion apparatus 2, the alternating current power distribution apparatus 3, and the direct current power distribution apparatus 4 are all mounted in the device cabinet 1.

An input end of the alternating current power distribution apparatus 3 is configured to connect to a power supply 200. The power supply 200 may be a power grid. An output end of the alternating current power distribution apparatus 3 is connected to an input end of the power conversion apparatus 2. The alternating current power distribution apparatus 3 is configured to control connection and disconnection of a circuit between the power supply 200 and the power conversion apparatus 2. The power conversion apparatus 2 is configured to: convert an alternating current input by the power supply 200 through the alternating current power distribution apparatus 3 into a direct current, and output the direct current. An output end of the power conversion apparatus 2 is connected to an input end of the direct current power distribution apparatus 4.

In addition, refer to FIG. 1. The charging device 100 further includes at least one charging connector 5 and at least one cable 6 (charging connector cable). In the embodiment shown in FIG. 1, one charging connector 5 is disposed, and one cable 6 is also disposed. The charging connector 5 is located outside the device cabinet 1. The charging connector 5 is configured to connect to a to-be-charged apparatus (for example, an electric vehicle). A part of the cable 6 is located outside the device cabinet 1 and connected to the charging connector 5. The other part of the cable 6 is located in the device cabinet 1. The charging connector 5 is connected to the direct current power distribution apparatus 4 through the cable 6. The direct current power distribution apparatus 4 is configured to control connection and disconnection of a circuit between the power conversion apparatus 2 and the cable 6. The charging connector 5 can output a current obtained through power conversion by the power conversion apparatus 2.

In another embodiment, there is no obvious alternating current power distribution apparatus 3 or direct current power distribution apparatus 4 in the device cabinet 1 of the charging device 100.

FIG. 2 shows an example of a structure of another charging device 100. Refer to FIG. 2. The charging device 100 is a split charging pile. The charging device 100 includes a main body part and a plurality of terminal parts. The main body part of the charging device 100 includes a main cabinet 7, a power conversion apparatus 2, an alternating current power distribution apparatus 3, and a power distribution apparatus 8. The power conversion apparatus 2, the alternating current power distribution apparatus 3, and the power distribution apparatus 8 are all mounted in the main cabinet 7. An input end of the alternating current power distribution apparatus 3 is configured to connect to a power supply 200 (for example, a power grid). The power conversion apparatus 2 is configured to: convert an alternating current input by the power supply 200 into a direct current, and output the direct current. The power distribution apparatus 8 is configured to distribute the direct current output by the power conversion apparatus 2 to one or more of the terminal parts.

Each terminal part of the charging device 100 includes a device cabinet 1, a direct current power distribution apparatus 4, at least one charging connector 5, and at least one cable 6. For example, in the embodiment shown in FIG. 2, each terminal part is provided with one charging connector 5, each terminal part is also provided with one cable 6, and each terminal part is also provided with one direct current power distribution apparatus 4. The direct current power distribution apparatus 4 is mounted in the device cabinet 1. The charging connector 5 is located outside the device cabinet 1. A part of the cable 6 is located outside the device cabinet 1 and connected to the charging connector 5. The other part of the cable 6 is located in the device cabinet 1. The charging connector 5 is connected to the direct current power distribution apparatus 4 through the cable 6. In addition, the direct current power distribution apparatus 4 is further connected to the power distribution apparatus 8 in the main cabinet 7 through a conductive wire. The direct current power distribution apparatus 4 is configured to control connection and disconnection of a circuit between the power distribution apparatus 8 and the cable 6. The power distribution apparatus 8 distributes the direct current output by the power conversion apparatus 2 to a corresponding terminal part. The direct current distributed to the terminal part is output through the charging connector 5 of the terminal part.

In addition, the charging device 100 further includes a management assembly 9 (which may also be referred to as a charging connector cable management assembly). Refer to FIG. 1 and FIG. 2. The management assembly 9 is fastened to the top of the device cabinet 1. The management assembly 9 may be connected to the cable 6 or the charging connector 5. The management assembly 9 can bear a part of weight of the charging connector 5 and the cable 6. This helps a user use the charging connector 5 for charging and conveniently move the cable 6. In addition, the management assembly 9 can further lift the cable 6, thereby reducing a possibility of the cable 6 being in contact with a ground and increasing a service life of the cable 6. The management assembly 9 includes a mounting base 91 and at least one movable member 92. The mounting base 91 is fastened to the top of the device cabinet 1. The movable member 92 is connected to the mounting base 91 and is movable relative to the mounting base 91. A quantity of movable members 92 is the same as a quantity of cables 6 (namely, a quantity of charging connectors 5). Each movable member 92 is connected to one charging connector 5 or connected to one cable 6.

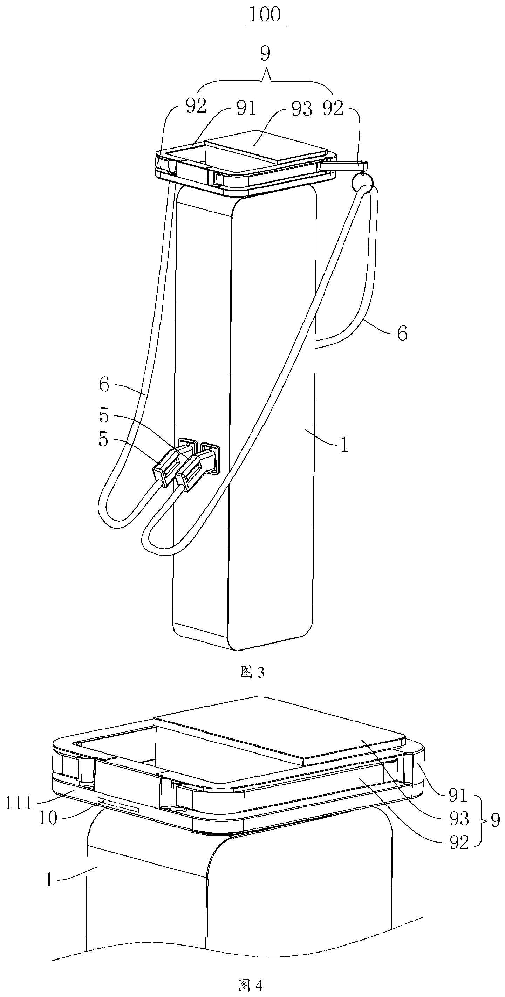

In embodiments shown in FIG. 1 and FIG. 2, the charging connector 5 and the cable 6 are disposed outside the device cabinet 1. The management assembly 9 is provided with the movable member 92. The movable member 92 is connected to the cable 6 and helps bear the weight of the cable 6 for the user. FIG. 3 shows an example of a structure of still another charging device 100. Refer to FIG. 3. A plurality of charging connectors 5 and a plurality of cables 6 are disposed outside a device cabinet 1. A management assembly 9 is provided with a plurality of movable members 92. Each movable member 92 is connected to one cable 6. The plurality of movable members 92 help bear weight of the plurality of cables 6 for the user.

In another embodiment, each movable member 92 is connected to one charging connector 5 and helps bear weight of the charging connector 5 for the user.

In some usage scenarios of the charging device 100, particularly in a low-light scenario, the user cannot quickly find the charging device 100 and cannot conveniently use the charging device 100 (for example, inserting or removing the charging connector 5), consequently affecting operation efficiency and user experience of the user. To resolve the foregoing problem, the charging device 100 further includes a light source 10. FIG. 4 shows an example of a structure of the light source 10. Refer to FIG. 4. The light source 10 is fastened to the mounting base 91. The light source 10 may be any appropriate light-emitting structure. For example, the light source 10 is a lamp that can emit light (for example, an LED lamp).

The management assembly 9 is disposed at the top of the device cabinet 1, and the light source 10 is disposed on the management assembly 9, so that a position of the light source 10 is higher. The light source 10 can illuminate an area in which the device cabinet 1 is located to some extent, to achieve illumination effect, making it convenient for the user to perform a charging operation by using the charging connector 5 in the device cabinet 1. In addition, the light emitted by the light source 10 can make the user aware of presence of the device cabinet 1 of the charging device 100, visually guiding and attracting the user, making it convenient for the user to quickly find the device cabinet 1 and use the charging connector 5 in the device cabinet 1 for charging. In conclusion, the light source 10 at a higher position can provide illumination and guidance, particularly in the low-light scenario, thereby improving the operation efficiency and user experience of the user in a process of operating the charging connector 5.

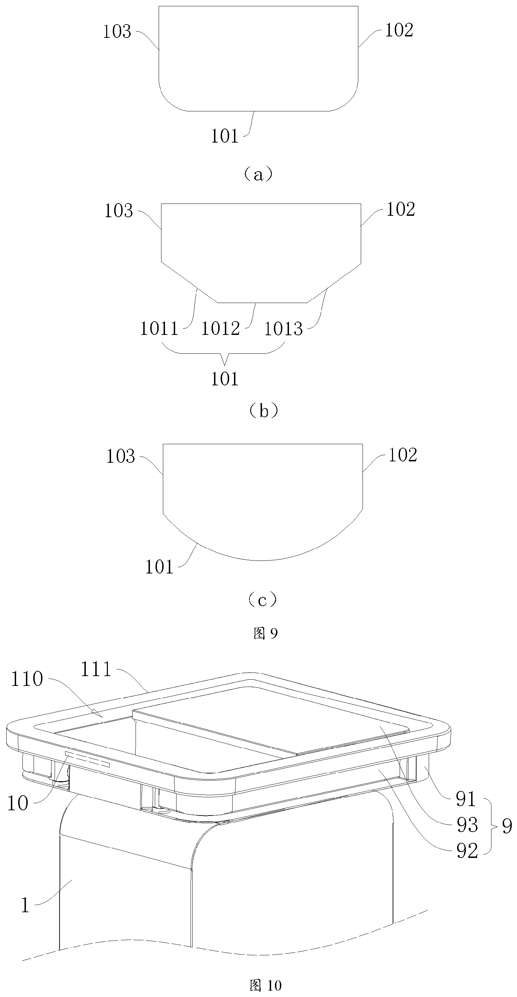

In an embodiment, refer to FIG. 10. To protect the light source 10, the charging device 100 further includes a light source cover 111, and the light source 10 is mounted in the light source cover 111. It should be noted that, in FIG. 4 and subsequent accompanying drawings, the light source 10 located in the light source cover 111 is indicated by a dashed box, which merely indicates that the light source 10 is mounted in the light source cover 111 and does not limit the structure of the light source. A shape of the light source 10 may be designed as required. For example, the light source 10 is in a ring shape. For another example, the light source 10 is in a columnar shape. For another example, the light source 10 is in a block shape, a granular shape, or a spherical shape.

When the charging device 100 includes the light source cover 111, the light source 10 needs to emit the light outward to make the light source 10 can provide illumination or guidance. Therefore, the light source cover 111 has a light-emitting surface, and the light-emitting surface of the light source cover 111 can allow light to pass through. In addition, the light-emitting surface of the light source cover 111 may be any appropriate surface on an outer surface of the light source cover 111. In an embodiment, all outer surfaces of the light source cover 111 are light-emitting surfaces, so that the light source 10 can emit the light in various directions.

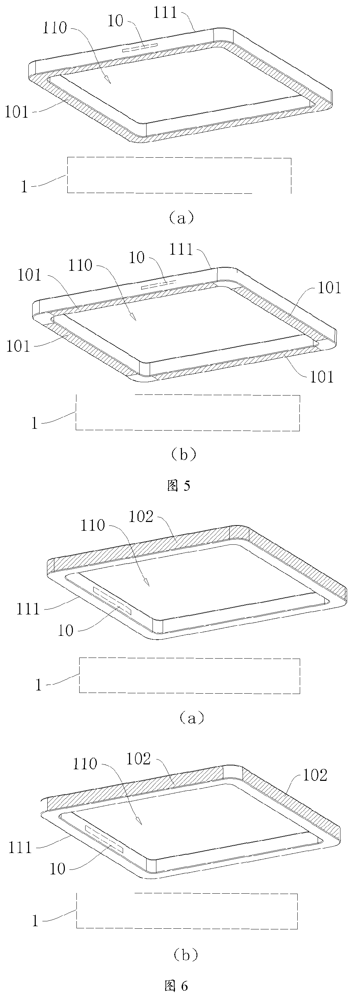

In an embodiment, the bottom of the light source cover 111 has a first light-emitting surface 101. FIG. 5A and FIG. 5B show an example of structures of a plurality of first light-emitting surfaces 101. For ease of distinguishing, there are hatching lines on the first light-emitting surfaces 101 shown in FIG.5A and FIG. 5B. In addition, dashed boxes in FIG.5A and FIG. 5B indicate the area in which the device cabinet 1 is located. In other words, the device cabinet 1 is located below the first light-emitting surface 101. The first light-emitting surface 101 can allow the light emitted by the light source 10 to pass through. The first light-emitting surface 101 is located at the bottom of the light source cover 111. The light emitted by the light source 10 can pass through the first light-emitting surface 101 and illuminate an area below the light source cover 111. In other words, the area in which the device cabinet 1 is located is illuminated, making it convenient for the user to perform the charging operation by using the charging connector 5. In addition, the area in which the device cabinet 1 is located is illuminated by using the light source 10, so that the user can be aware of the presence of the device cabinet 1, visually guiding and attracting the user, making it convenient for the user to quickly find the device cabinet 1.

A shape of the first light-emitting surface 101 may be designed as required. Refer to FIG.5A and FIG. 5B. The light source cover 111 is in a ring shape, and an opening 110 enclosed by the light source cover 111 faces the device cabinet 1. In other words, the device cabinet 1 is located below the opening 110 enclosed by the light source cover 111. The ring shape includes a circular ring shape, a square ring shape, or an irregular ring shape, provided that the light source cover 111 extends around an axis to form a ring-shaped light source 10.

In an embodiment, refer to FIG.5A. When the light source cover 111 is in the ring shape, the first light-emitting surface 101 is a ring-shaped surface and faces a side on which the device cabinet 1 is located. In another embodiment, refer to FIG. 5B. The first light-emitting surface 101 is a rectangular surface, a plurality of first light-emitting surfaces 101 are disposed, and the plurality of first light-emitting surfaces 101 are disposed around the opening 110. In this embodiment, not all areas of the bottom of the light source cover 111 are provided with the first light-emitting surface 101. In another embodiment, the first light-emitting surface 101 is the rectangular surface shown in FIG. 5B. However, one first light-emitting surface 101 is disposed. In this embodiment, not all areas of the bottom of the light source cover 111 are provided with the first light-emitting surface 101. In another embodiment, the first light-emitting surface 101 is an irregular shape.

When the light source cover 111 is in another shape, the first light-emitting surface 101 may be a surface of any shape at the bottom of the light source cover 111. For example, when the light source cover 111 is a columnar shape, the first light-emitting surface 101 may be a circular surface at the bottom of the light source cover 111.

In an embodiment, a side portion of the light source cover 111 has a second light-emitting surface 102. FIG. 6A and FIG. 6B show an example of structures of a plurality of second light-emitting surface 102. For ease of distinguishing, there are hatching lines on the second light-emitting surfaces 102 shown in FIG. 6A and FIG. 6B. In addition, dashed boxes in FIG. 6A and FIG. 6B indicate the area in which the device cabinet 1 is located. The second light-emitting surface 102 can allow the light emitted by the light source 10 to pass through. The light emitted by the light source 10 can pass through the second light-emitting surface 102 and is emitted outward. The second light-emitting surface 102 located on the side portion of the light source cover 111 can allow the light source 10 to emit the light outward. This helps guide and attract the user located farther away on a basis of illuminating the area in which the device cabinet 1 is located.

A shape of the second light-emitting surface 102 may be designed as required. In an embodiment, refer to FIG. 6A. When the light source cover 111 is in a ring shape, the second light-emitting surface 102 is a ring-shaped surface and serves as an outer circumferential surface (a surface facing away from an opening 110) of the light source cover 111. The ring-shaped surface includes a circular ring shape, a square ring surface, or an irregular ring surface, provided that the second light-emitting surface 102 extends around an axis to form the ring-shaped surface. In the embodiment shown in FIG. 6A, the axis surrounded by the second light-emitting surface 102 is parallel to a vertical direction. It should be noted that the vertical direction is a gravity direction, that is, a height direction of the device cabinet 1, and an error of ±10° is allowed in the foregoing "parallel". When the second light-emitting surface 102 is the ring-shaped surface, if there is no other structure to obstruct the light source cover 111, the user can see the light emitted by the second light-emitting surface 102 from any direction, thereby increasing a possibility of the light source 10 being seen.

In another embodiment, refer to FIG. 6B. The second light-emitting surface 102 is a rectangular surface, a plurality of second light-emitting surfaces 102 are disposed, and the plurality of second light-emitting surfaces 102 are disposed around the opening 110. In this embodiment, not all areas of the outer circumferential surface of the light source cover 111 are provided with the second light-emitting surface 102. In another embodiment, the second light-emitting surface 102 is the rectangular surface shown in FIG. 6B. However, one second light-emitting surface 102 is disposed. In this embodiment, not all areas of the outer circumferential surface of the light source cover 111 are provided with the second light-emitting surface 102. In another embodiment, the second light-emitting surface 102 is an irregular shape.

When the light source cover 111 is in a columnar shape, in an embodiment, the second light-emitting surface 102 is all outer circumferential surfaces of the light source cover 111. In another embodiment, the second light-emitting surface 102 is a part of the outer circumferential surface of the light source cover 111.

In an embodiment, the side portion of the light source cover 111 has the second light-emitting surface 102, and the bottom of the light source cover 111 further has a first light-emitting surface 101. In an embodiment, the side portion of the light source cover 111 has the second light-emitting surface 102, and the bottom of the light source cover 111 does not have the first light-emitting surface 101.

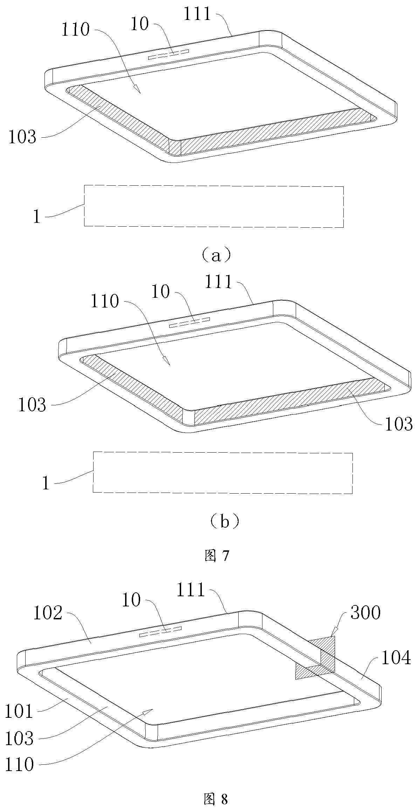

When the light source cover 111 is in the ring shape and encloses an opening 110, in an embodiment, the light source cover 111 has a third light-emitting surface 103 facing the opening 110. FIG. 7A and FIG. 7B show an example of structures of a plurality of third light-emitting surface 103. For ease of distinguishing, there are hatching lines on the third light-emitting surfaces 103 shown in FIG. 7A and FIG. 7B. In addition, dashed boxes in FIG. 7A and FIG. 7B indicate the area in which the device cabinet 1 is located. The third light-emitting surface 103 can allow the light emitted by the light source 10 to pass through. The light emitted by the light source 10 can pass through the third light-emitting surface 103. The third light-emitting surface 103 increases a light-emitting area of the light source cover 111, so that the light emitted by the light source 10 is more obvious visually, and effect of illuminating the area in which the device cabinet 1 is located is better.

In an embodiment, on a basis that the light source cover 111 has the third light-emitting surface 103, the bottom of the light source cover 111 further has a first light-emitting surface 101, and a side portion of the light source cover 111 further has a second light-emitting surface 102. In another embodiment, the light source cover 111 has the third light-emitting surface 103 but does not include the first light-emitting surface 101 located at the bottom of the light source cover 111, and the light source cover 111 does not have the second light-emitting surface 102 located on the side portion of the light source cover 111 either. In another embodiment, on the basis that the light source cover 111 has the third light-emitting surface 103, the bottom of the light source cover 111 further has the first light-emitting surface 101, and the side portion of the light source cover 111 does not have the second light-emitting surface 102. In another embodiment, on the basis that the light source cover 111 has the third light-emitting surface 103, the side portion of the light source cover 111 further has the second light-emitting surface 102, and the bottom of the light source cover 111 does not have the first light-emitting surface 101.

A shape of the third light-emitting surface 103 may be designed as required. For example, refer to FIG. 7A. The third light-emitting surface 103 is a ring-shaped surface and serves as an inner circumferential surface of the light source cover 111. The ring-shaped surface includes a circular ring shape, a square ring surface, or an irregular ring surface, provided that the third light-emitting surface 103 extends around an axis to form the ring-shaped surface. In the embodiment shown in FIG.7A, the axis surrounded by the third light-emitting surface 103 is parallel to a vertical direction. It should be noted that the vertical direction is a gravity direction, that is, a height direction of the device cabinet 1, and an error of ±10° is allowed in the foregoing "parallel". For another example, refer to FIG. 7B. The third light-emitting surface 103 is a rectangular surface, a plurality of third light-emitting surfaces 103 are disposed, and the plurality of third light-emitting surfaces 103 are disposed around an opening 110. In this embodiment, not all areas of the inner circumferential surface of the light source cover 111 are provided with the third light-emitting surface 103. For another example, the third light-emitting surface 103 is the rectangular surface shown in FIG. 7B. However, one third light-emitting surface 103 is disposed. In this embodiment, not all areas of the inner circumferential surface of the light source cover 111 are provided with the third light-emitting surface 103. For another example, the third light-emitting surface 103 is an irregular shape.

When the light source cover 111 is in the ring shape, FIG. 8 shows an example of a position at which a cross section of the light source cover 111 is obtained by cutting. Refer to FIG. 8. The cross section of the light source cover 111 is obtained by cutting a segment (named as a cross-sectional segment 104) of the light source cover 111. The cross section of the light source cover 111 is obtained by cutting the cross-sectional segment 104 along a shaded surface 300 in FIG. 8. The shaded surface 300 is perpendicular to an extension direction of the cross-sectional segment 104. In other words, the cross section obtained by cutting the light source cover 111 along the shaded surface 300 is perpendicular to the extension direction of the cross-sectional segment 104. FIG. 9A to FIG. 9C show an example of structures of a plurality of cross sections. It may be understood that a cross section shown in FIG. 9A, a cross section shown in FIG. 9B, and a cross section shown in FIG. 9C are respectively obtained by cutting different light source covers 111.

In the embodiment shown in FIG. 8, the light source cover 111 has the first light-emitting surface 101, the second light-emitting surface 102, and the third light-emitting surface 103. Refer to FIG. 9A to FIG. 9C. The first light-emitting surface 101, the second light-emitting surface 102, and the third light-emitting surface 103 respectively form different edges of the cross section. For example, refer to FIG. 9A. An edge at the bottom of the cross section is formed by the first light-emitting surface 101, an edge that is of the cross section and that faces away from the opening 110 is formed by the second light-emitting surface 102, and an edge that is of the cross section and that faces the opening 110 is formed by the third light-emitting surface 103. If the edge formed by the first light-emitting surface 101 on the cross section is a straight edge, the first light-emitting surface 101 is a plane.

For another example, refer to FIG. 9B. An edge at the bottom of the cross section is formed by the first light-emitting surface 101, an edge that is of the cross section and that faces away from the opening 110 is formed by the second light-emitting surface 102, and an edge that is of the cross section and that faces the opening 110 is formed by the third light-emitting surface 103. If the edge formed by the first light-emitting surface 101 on the cross section is a polyline edge, the first light-emitting surface 101 includes a first surface 1011, a second surface 1012, and a third surface 1013 that are connected, and the second surface 1012 is connected between the first surface 1011 and the third surface 1013.

For another example, refer to FIG. 9C. An edge at the bottom of the cross section is formed by the first light-emitting surface 101, an edge that is of the cross section and that faces away from the opening 110 is formed by the second light-emitting surface 102, and an edge that is of the cross section and that faces the opening 110 is formed by the third light-emitting surface 103. If the edge formed by the first light-emitting surface 101 on the cross section is an arc-shaped side, the first light-emitting surface 101 is an arc surface.

The light source cover 111 may be fastened at any appropriate position in the device cabinet 1. In an embodiment, refer to FIG. 4. The light source cover 111 is fastened to the bottom of the mounting base 91. For example, the light source cover 111 is located between the mounting base 91 and the device cabinet 1. The first light-emitting surface 101 is located at the bottom of the light source cover 111, and the first light-emitting surface 101 faces the device cabinet 1. The mounting base 91 does not obstruct the first light-emitting surface 101 of the light source cover 111, so that the light source 10 can achieve better illumination effect.

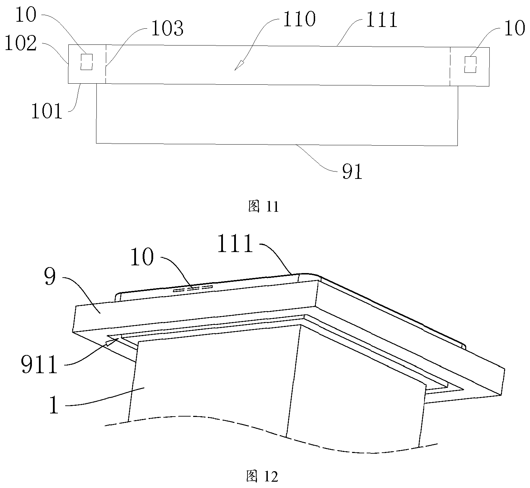

In another embodiment, FIG. 10 shows an example of a structure of another light source 10. Refer to FIG. 10. The light source 10 is located in the light source cover 111, and the light source cover 111 is fastened to the top of the mounting base 91. The light source cover 111 is fastened to the top of the mounting base 91, so that the position of the light source 10 is higher. This helps guide and attract the user located farther away, and helps the user quickly find the device cabinet 1. A part of the light source cover 111 protrudes beyond an outer circumference of the mounting base 91. FIG. 11 shows an example of a structure in which the light source cover 111 protrudes beyond the outer circumference of the mounting base 91. Refer to FIG. 11. The part (an outer edge part) of the light source cover 111 protrudes beyond the outer circumference of the mounting base 91. The first light-emitting surface 101 is located in a part that is of the light source cover 111 and that protrudes beyond the outer circumference of the mounting base 91, so that the mounting base 91 does not obstruct the first light-emitting surface 101 of the light source cover 111, and the light source 10 can illuminate an area below through the first light-emitting surface 101, thereby achieving better illumination effect.

In another embodiment, the light source cover 111 may alternatively not protrude beyond the outer circumference of the mounting base 91. FIG. 12 shows an example of still another structure of the light source 10. The light source 10 is located in the light source cover 111. Refer to FIG. 12. The light source cover 111 is fastened to the top of the mounting base 91. The mounting base 91 has a light transmission opening 911. The light transmission opening 911 is a hollow area on the mounting base 91. The light transmission opening 911 penetrates the mounting base 91 in an arrangement direction of the mounting base 91 and the device cabinet 1. At least a part (a part or all) of the light source cover 111 is located at the light transmission opening 911. In other words, at least the part of the light source cover 111 is located right above the light transmission opening 911. A surface that is of the light source cover 111 and that faces the light transmission opening 911 is the first light-emitting surface 101 (with auxiliary reference to FIG. 5A and FIG. 5B). The light emitted by the light source 10 through the first light-emitting surface 101 passes through the light transmission opening 911. In other words, the light source 10 can illuminate the area below through the light transmission opening 911, so that the light source 10 achieves better illumination effect.

In another embodiment, the mounting base 91 has the light transmission opening 911. The part of the light source cover 111 protrudes beyond the outer circumference of the mounting base 91, and a part of the light source cover 111 is further located at the light transmission opening 911. A part that is of the light source cover 111 and protrudes beyond the outer circumference of the mounting base 91 has a light-emitting surface, and a part that is of the light source cover 111 and that is located at the light transmission opening 911 also has a light-emitting surface. The light source cover 111 can illuminate an area below through the part protruding to the outer circumference of the mounting base 91. Alternatively, the light source cover 111 can illuminate an area below through the light transmission opening 911.

In another embodiment, the light source cover 111 integrally surrounds the outer circumference of the mounting base 91.

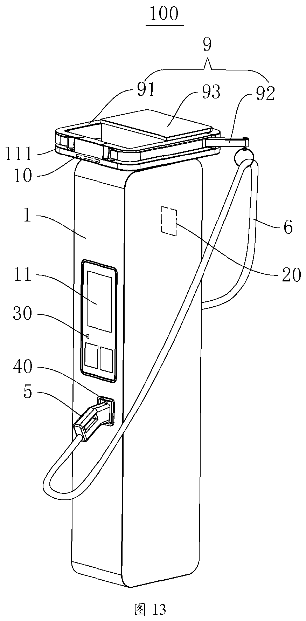

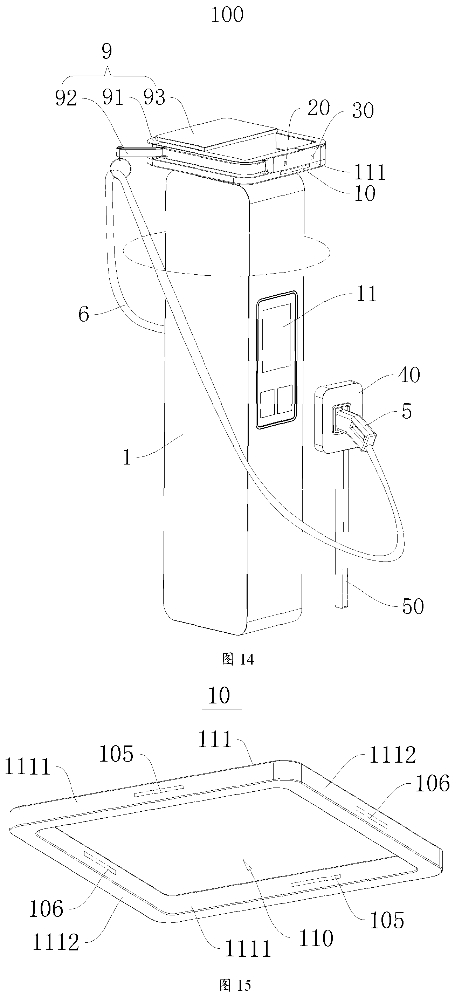

In addition, in an embodiment, the charging device 100 further includes a controller 20. The controller 20 is configured to control a light source 10 to emit light. FIG. 13 shows an example of a structure of still another charging device 100. Refer to FIG. 13. The controller 20 is fastened inside a device cabinet 1. In another embodiment, FIG. 14 shows an example of a structure of still another charging device 100. Refer to FIG. 14. The controller 20 is fastened to a mounting base 91. The controller 20 can control light emitting of the light source 10, so that the light source 10 can emit the light as required.

In an embodiment, the controller 20 can control turn-on (light emitting) and turn-off (stop emitting light) of the light source 10, so that the light source 10 emits light in a required time period and stops emitting light in an unrequired time period. In a first time period, the controller 20 is configured to control the light source 10 to emit the light. For example, the first time period is nighttime, and because ambient light is dim in nighttime, the controller 20 needs to turn on the light source 10 to emit the light, to achieve illumination and guidance effect, thereby improving operation efficiency and user experience of a user. In a second time period, the controller 20 is configured to control the light source 10 to stop emitting light. For example, the second time period is daytime, and because ambient light is sufficient in daytime, the light source 10 is turned off, to save energy.

In an embodiment, the controller 20 can control brightness of the light source 10. The charging device 100 further includes a sensor 30 (for example, a light sensor). The sensor 30 is configured to detect ambient brightness outside the device cabinet 1. In the embodiment shown in FIG. 13, the sensor 30 is fastened to the device cabinet 1. For example, the device cabinet 1 has a display 11, and the sensor 30 is fastened to the display 11. In the embodiment shown in FIG. 14, the sensor 30 is fastened to the mounting base 91. The sensor 30 can detect brightness of the ambient light outside the device cabinet 1, and the controller 20 adjusts the brightness of the light source 10 by using a detection result of the sensor 30.

For example, when brightness outside the device cabinet 1 is less than a first brightness threshold, the controller 20 is configured to control brightness of the light source 10 to decrease. To be specific, when the brightness of the ambient light becomes dim (when the brightness is less than the first brightness threshold), the brightness of the light source 10 also becomes dim, thereby reducing a possibility of light pollution caused by the light source 10. For another example, when brightness outside the device cabinet 1 is greater than a second brightness threshold, the controller 20 is configured to control brightness of the light source 10 to increase. To be specific, when the brightness of the ambient light becomes bright (when the brightness is greater than the second brightness threshold), the brightness of the light source 10 increases, so that a person can see the light emitted by the light source 10, visually guiding and attracting the user, making it convenient for the user to quickly find the device cabinet 1.

In an embodiment, refer to FIG. 13 and FIG. 14. To mount a charging connector 5, the charging device 100 further includes a charging connector holder 40. The charging connector holder 40 is configured to mount the charging connector 5. When the charging connector 5 is idle (when the charging connector 5 is not used by the user), each charging connector 5 is mounted in a corresponding charging connector holder 40. If the user needs to use the charging connector 5, the charging connector 5 is removed from the charging connector holder 40. In the embodiment shown in FIG. 13, the charging connector holder 40 is fastened on a cabinet panel of the device cabinet 1. In the embodiment shown in FIG. 14, the charging device 100 further includes a support bracket 50, and the support bracket 50 is fastened on one side of the device cabinet 1. For example, both the support bracket 50 and the device cabinet 1 are fastened on a ground, and the charging connector holder 40 is located outside the device cabinet 1 and fastened to the support bracket 50. In addition, the charging connector holder 40 may alternatively be fastened at another position outside the device cabinet 1. For example, the charging connector holder 40 may alternatively be fastened to a management assembly 9. To be specific, a bracket extending downward is fastened to the management assembly 9, and the charging connector holder 40 is located outside the device cabinet 1 and fastened to the bracket.

If the charging connector 5 is mounted in the charging connector holder 40, it indicates that the charging connector 5 is idle and can be used by the user. If the charging connector 5 is not mounted in the charging connector holder 40, it indicates that the charging connector 5 is in use. If all charging connectors 5 in the device cabinet 1 are in use, the charging connectors 5 in the device cabinet 1 cannot be used by another user, and the another user needs to find another device cabinet 1 that can be used for charging. To save a time for the user to select the device cabinet 1, the controller 20 can control the turn-on and the turn-off of the light source 10, to indicate whether the charging connector 5 in the device cabinet 1 can be used.

For example, when any charging connector 5 is mounted in the charging connector holder 40, the controller 20 is configured to control the light source 10 to emit light; and when all charging connectors 5 are removed from the charging connector holder 40, the controller 20 is configured to control the light source 10 to stop emitting light. To be specific, when the light source 10 emits light, it indicates that at least one charging connector 5 in the device cabinet 1 is idle, and the user may use the charging connector 5 in the device cabinet 1 to charge; and when the light source 10 stops emitting light, it indicates that all charging connectors 5 in the device cabinet 1 are in use, and the user needs to find another device cabinet 1. In this design manner, light emitting of the light source 10 connected to the device cabinet 1 indicates that the charging connector 5 in the device cabinet 1 can be used, so that the user can quickly find this kind of device cabinet 1 and use an idle charging connector 5 in the device cabinet 1, thereby improving user experience.

For another example, when any charging connector 5 is mounted in the charging connector holder 40, the controller 20 is configured to control the light source 10 to stop emitting light; and when all charging connectors 5 are removed from the charging connector holder 40, the controller 20 is configured to control the light source 10 to emit light. To be specific, if the light source 10 stops emitting light, it indicates that at least one charging connector 5 in the device cabinet 1 is idle; and if the light source 10 emits light, it indicates that all charging connectors 5 in the device cabinet 1 are in use. The light source 10 emitting light prompts the user to find another device cabinet 1, thereby saving the time for the user to select the device cabinet 1.

It should be noted that, in an embodiment (for example, the embodiments shown in FIG. 13 and FIG. 14) in which one charging connector 5 is connected to the device cabinet 1, when any charging connector 5 is mounted in the charging connector holder 40 indicates that the charging connector 5 is mounted in the charging connector holder 40; and when all charging connectors 5 are removed from the charging connector holder 40 indicates that the charging connector 5 is removed from the charging connector holder 40. In an embodiment (for example, the embodiment shown in FIG. 3) in which a plurality of charging connectors 5 are connected to the device cabinet 1, when any charging connector 5 is mounted in the charging connector holder 40 indicates that at least one charging connector 5 is mounted in a corresponding charging connector holder 40; and when all charging connectors 5 are removed from the charging connector holder 40 indicates that each charging connector 5 is removed from a corresponding charging connector holder 40.

In an embodiment, the light source 10 is configured to emit light of different colors. The controller 20 controls a color of the light emitted by the light source 10 to indicate whether the charging connector 5 in the device cabinet 1 can be used, so that the user located farther away can identify a status of the charging connector 5 in the device cabinet 1, thereby saving the time for the user to select the device cabinet 1. For example, the light source 10 is configured to emit first light and second light of different colors. When any charging connector 5 is mounted in the charging connector holder 40, the controller 20 is configured to control the light source 10 to emit the first light. When all charging connectors 5 are removed from the charging connector holder 40, the controller 20 is configured to control the light source 10 to emit the second light.

To be specific, when the light source 10 emits the first light, it indicates that at least one charging connector 5 in the device cabinet 1 is idle, and the user may use the charging connector 5 in the device cabinet 1 to charge. When the light source 10 emits the second light, it indicates that all charging connectors 5 in the device cabinet 1 are in use, and the user needs to find another device cabinet 1 to use the charging connector 5 to charge. In addition, the first light and the second light can also provide illumination to some extent, thereby improving the operation efficiency and user experience of the user in a process of operating the charging connector 5 in a low-light scenario.

A color of the first light and a color of the second light may be selected as required. For example, one of the first light and the second light is white light, and the other is blue light. For another example, one of the first light and the second light is green light, and the other is blue light. For another example, one of the first light and the second light is green light, and the other is red light. For another example, one of the first light and the second light is blue light, and the other is red light.

In addition, in an embodiment, in addition to being configured to emit the first light and the second light, the light source 10 is further configured to emit third light, and both the color of the first light and the color of the second light are different from a color of the third light. The third light emitted by the light source 10 serves as independent illumination light (for example, white light or yellow light), to illuminate an area in which the device cabinet 1 is located and assist the user in charging.

In an embodiment, the third light is steady on. In another embodiment, the controller 20 can control turn-on and turn-off of the light source 10, so that the light source 10 emits light in a required time period and stops emitting light in an unrequired time period. For example, in a first time period, the controller 20 is configured to control the light source 10 to emit the third light; and in a second time period, the controller 20 is configured to control the light source 10 to turn off the third light. Regardless of whether it is in the first time period or the second time period, both the first light and the second light are selectively emitted based on a status of the charging connector 5 in the device cabinet 1. In other words, the first light and the second light are not affected by the first time period and the second time period. However, the third light is emitted only in the first time period (for example, in nighttime) to provide enhanced illumination (because the first light and the second light can also provide illumination to some extent, the third light enhances illumination). In the second time period (for example, in daytime), the light source 10 does not emit the third light, to save energy.

The third light assists the first light and the second light, so that the light source 10 can indicate the status of the charging connector 5 in the device cabinet 1 and also emit light in the required time period, to enhance illumination.

A color of light may be determined through direct observation by human eyes, or may be determined by detecting a wavelength, a frequency, or the like of the light. In an embodiment, the light source 10 emits white light through a white LED lamp in the light source 10. In an embodiment, the light source 10 emits light of different colors through an RGB LED lamp in the light source 10. If the light source 10 needs to emit both white light and light of another color, in an embodiment, the light source 10 includes both the white LED lamp and the RGB LED lamp, so that a required function can be achieved.

In a specific time period, if the light source 10 simultaneously emits a plurality of different colors of light, when the brightness of the light source 10 needs to be reduced, the controller 20 may reduce brightness of a specific color of light emitted by the light source 10, or the controller 20 may reduce brightness of all colors of light emitted by the light source 10.

When the light source 10 can emit the plurality of different colors of light, light with different functions can be emitted in different areas. For example, the light source 10 includes a first part 105 and a second part 106. FIG. 15 shows an example of structures of the first part 105 and the second part 106. Refer to FIG. 15. The first part 105 is configured to emit the first light and the second light, and the second part 106 is configured to emit the third light. The first light and the second light that indicate the status of the charging connector 5 is emitted in the first part 105, and the third light that enhances illumination is emitted in the second part 106, so that light with the different functions is emitted in different areas, thereby reducing a possibility of mutual interference between light with the different functions, and making effect of each functional light more obvious.

In the embodiment shown in FIG. 15, a light source cover 111 is in a ring shape, a plurality of first parts 105 and a plurality of second parts 106 are disposed, and the plurality of first parts 105 and the plurality of second parts 106 are alternately arranged in a circumferential direction of the device cabinet 1. For the circumferential direction of the device cabinet 1, refer to the dashed line in FIG. 14. The dashed line in FIG. 14 externally surrounds the device cabinet 1 in the circumferential direction of the device cabinet 1. For example, the light source cover 111 includes two first segments 1111 and two second segments 1112. Each first segment 1111 is in a long strip shape, and each second segment 1112 is also in a long strip shape. Length directions of the two first segments 1111 are parallel, and length directions of the two second segments 1112 are parallel. One end of each first segment 1111 is connected to one second segment 1112, and the other end of each first segment 1111 is connected to the other second segment 1112. One end of each second segment 1112 is connected to one first segment 1111, and the other end of each second segment 1112 is connected to the other first segment 1111. The first part 105 (the first part 105 includes a light-emitting structure used to emit the first light and the second light in the first segment 1111) is disposed in each first segment 1111. The second part 106 (the second part 106 includes a light-emitting structure used to emit the third light in the second segment 1112) is disposed in each second segment 1112.

If the light source 10 uses the structure shown in FIG. 15, when the light source cover 111 has a first light-emitting surface 101, in an embodiment, the first light-emitting surface 101 includes a surface that is of each first segment 1111 and that faces the device cabinet 1 and a surface that is of each second segment 1112 and that faces the device cabinet 1. In another embodiment, the first light-emitting surface 101 includes a surface that is of each first segment 1111 and that faces the device cabinet 1, but does not include a surface that is of each second segment 1112 and that faces the device cabinet 1. In another embodiment, the first light-emitting surface 101 includes a surface that is of each second segment 1112 and that faces the device cabinet 1, but does not include a surface that is of each first segment 1111 and that faces the device cabinet 1.

If the light source 10 uses the structure shown in FIG. 15, when the light source cover 111 has a second light-emitting surface 102, in an embodiment, the second light-emitting surface 102 includes a surface that is of each first segment 1111 and that faces away from an opening 110 and a surface that is of each second segment 1112 and that faces away from the opening 110. In another embodiment, the second light-emitting surface 102 includes a surface that is of each first segment 1111 and that faces away from an opening 110, but does not include a surface that is of each second segment 1112 and that faces away from the opening 110. In another embodiment, the second light-emitting surface 102 includes a surface that is of each second segment 1112 and that faces away from an opening 110, but does not include a surface that is of each first segment 1111 and that faces away from the opening 110.

If the light source 10 uses the structure shown in FIG. 15, when the light source cover 111 has a third light-emitting surface 103, in an embodiment, the third light-emitting surface 103 includes a surface that is of each first segment 1111 and that faces an opening 110 and a surface that is of each second segment 1112 and that faces the opening 110. In another embodiment, the third light-emitting surface 103 includes a surface that is of each first segment 1111 and that faces an opening 110, but does not include a surface that is of each second segment 1112 and that faces the opening 110. In another embodiment, the third light-emitting surface 103 includes a surface that is of each second segment 1112 and that faces an opening 110, but does not include a surface that is of each first segment 1111 and that faces the opening 110.

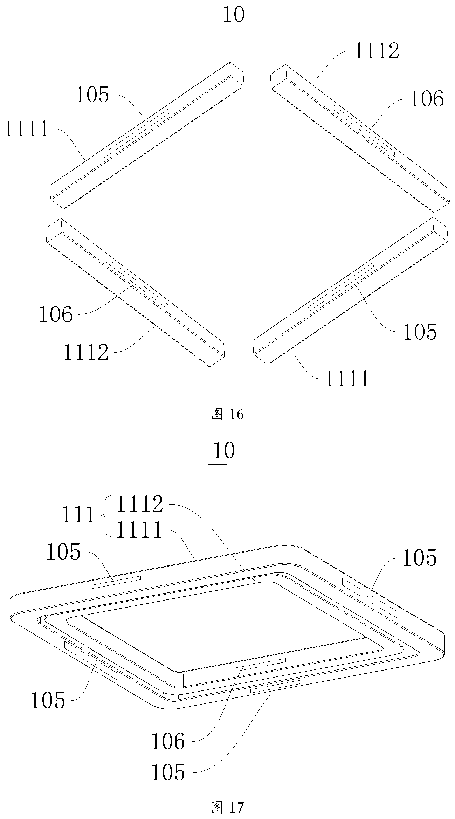

FIG. 16 shows an example of structures of another first part 105 and another second part 106. Refer to FIG. 16. A plurality of first parts 105 and a plurality of second parts 106 are disposed. A light source cover 111 also includes a plurality of segments, and the plurality of segments of the light source cover 111 are arranged in a circumferential direction of the device cabinet 1. In addition, each segment of the light source cover 111 is of an independent structure. For example, the light source cover 111 includes two first segments 1111 and two second segments 1112, each first segment 1111 is neither connected to the other first segment 1111 nor connected to the second segment 1112, and each second segment 1112 is neither connected to the other second segment 1112 nor connected to the first segment 1111. A first part 105 (the first part 105 includes a light-emitting structure used to emit the first light and the second light in the first segment 1111) is disposed in each first segment 1111, and a second part 106 (the second part 106 includes a light-emitting structure used to emit the third light in the second segment 1112) is disposed in each second segment 1112, so that the plurality of first parts 105 and the plurality of second parts 106 are alternately arranged in the circumferential direction (with auxiliary reference to FIG. 14) of the device cabinet 1.

The plurality of first parts 105 and the plurality of second parts 106 are alternately arranged in the circumferential direction of the device cabinet 1, so that the user standing at various positions can see the first light and the second light emitted by the first part 105, making it convenient for the user to determine whether the charging connector 5 in the device cabinet 1 can be used. In addition, the third light emitted by the second part 106 can illuminate more areas around the device cabinet 1, thereby improving illumination effect of the light source 10.

In an embodiment, the two first parts 105 are arranged in a thickness direction of the device cabinet 1, and the two second parts 106 are arranged in a width direction of the device cabinet 1. In another embodiment, the two first parts 105 are arranged in a width direction of the device cabinet 1, and the two second parts 106 are arranged in a thickness direction of the device cabinet 1. The thickness direction of the device cabinet 1 and the width direction of the device cabinet 1 are perpendicular to each other, and the thickness direction of the device cabinet 1 and the width direction of the device cabinet 1 are parallel to a horizontal plane. For example, when the device cabinet 1 includes the display 11, the thickness direction of the device cabinet 1 is a front-back direction when facing the display 11, and the width direction of the device cabinet 1 is a left-right direction when facing the display 11.

If the light source 10 uses the structure shown in FIG. 16, a light-emitting surface of the first segment 1111 and a light-emitting surface of the second segment 1112 in the light source cover 111 may be designed as required. For example, a surface that is of each first segment 1111 and that faces away from the other first segment 1111 is a light-emitting surface, and the bottom surface of each second segment 1112 is a light-emitting surface.

FIG. 17 shows an example of structures of still another first part 105 and still another second part 106. Refer to FIG. 17. A plurality of first parts 105 are disposed, and the plurality of first parts 105 surround an outer circumference of the second part 106. In addition, an area enclosed by the plurality of first parts 105 faces the device cabinet 1. One or more second parts 106 may be disposed. In the embodiment shown in FIG. 17, a light source cover 111 includes a ring-shaped first segment 1111 and a ring-shaped second segment 1112, the plurality of first parts 105 are all located in the first segment 1111, and the second part 106 is located in the second segment 1112. An opening 110 enclosed by the light source cover 111 is located on an inner side of the second segment 1112. Because the first light and the second light emitted by the first part 105 are used to assist a distant user in determining the status of the charging connector 5 in the device cabinet 1, the plurality of first parts 105 are located on the outer circumference of the second part 106, so that the user can see the first light and the second light emitted by the first part 105 from any direction in a case of no obstruction, making it convenient for the user to determine whether the charging connector 5 in the device cabinet 1 can be used. The third light emitted by the second part 106 is used for illumination, and may be disposed on an inner side of the first part 105 without affecting illumination effect of the second part 106.

If the light source 10 uses the structure shown in FIG. 17, when the light source cover 111 has a first light-emitting surface 101, in an embodiment, the first light-emitting surface 101 includes a surface that is of the first segment 1111 and that faces the device cabinet 1 and a surface that is of the second segment 1112 and that faces the device cabinet 1. In another embodiment, the first light-emitting surface 101 includes a surface that is of the second segment 1112 and that faces the device cabinet 1, but does not include a surface that is of the first segment 1111 and that faces the device cabinet 1. When the light source cover 111 has a second light-emitting surface 102, in an embodiment, the second light-emitting surface 102 includes a surface that is of the first segment 1111 and that faces away from the opening 110 and a surface that is of the second segment 1112 and that faces away from the opening 110. In another embodiment, the second light-emitting surface 102 includes a surface that is of the first part 105 and that faces away from the opening 110, but does not include a surface that is of each second segment 1112 and that faces away from the opening 110. When the light source cover 111 has a third light-emitting surface 103, in an embodiment, the third light-emitting surface 103 includes a surface that is of each first segment 1111 and that faces the opening 110 and a surface that is of each second segment 1112 and that faces the opening 110. In another embodiment, the third light-emitting surface 103 includes a surface that is of each second segment 1112 and that faces the opening 110, but does not include a surface that is of each first segment 1111 and that faces the opening 110.

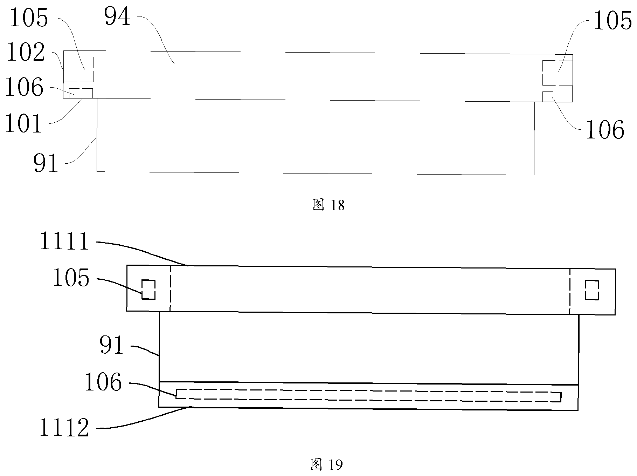

FIG. 18 shows an example of structures of still another first part 105 and still another second part 106. Refer to FIG. 18. The first part 105 is located above the second part 106. When a plurality of first parts 105 and a plurality of second parts 106 are disposed, each first part 105 is located above the plurality of second parts 106. Because the first light and the second light emitted by the first part 105 are used to assist a distant user in determining the status of the charging connector 5 in the device cabinet 1, a position of the first part 105 is higher (located above the second part 106), so that a possibility of the user seeing the first light and the second light emitted by the first part 105 is increased, making it convenient for the user to determine whether the charging connector 5 in the device cabinet 1 can be used. The third light emitted by the second part 106 is used for illumination, and a position of the second part 106 is lower, making it convenient for the second part 106 to illuminate downward the area in which the device cabinet 1 is located.

The first part 105 and the second part 106 may be mounted in any appropriate manner, so that the first part 105 is located above the second part 106. In the embodiment shown in FIG. 18, the management assembly 9 further includes a support base 94. The support base 94 is fastened to the top of the mounting base 91. A part of the support base 94 protrudes beyond the mounting base 91. Both the first part 105 and the second part 106 are fastened to the support base 94, and both the first part 105 and the second part 106 are at least partially (partially or completely) located on the part of the support base 94 protruding to the mounting base 91. The first part 105 is located above the second part 106. In the embodiment shown in FIG. 18, both the first part 105 and the second part 106 are in ring shapes. In another embodiment, both the first part 105 and the second part 106 are strip-shaped.

When the first part 105 is located above the second part 106, FIG. 19 shows an example of structures of still another first part 105 and still another second part 106. Refer to FIG. 19. The first part 105 is located at the top of the mounting base 91, so that a position of the first part 105 is higher, making it convenient for the user to determine whether the charging connector 5 in the device cabinet 1 can be used. In addition, the second part 106 is located at the bottom of the mounting base 91, so that a possibility of the mounting base 91 obstructing the first part 105 is reduced, making it convenient for the second part 106 to illuminate downward the area in which the device cabinet 1 is located.

In the embodiment shown in FIG. 19, a light source cover 111 includes a first segment 1111 and a second segment 1112. The first segment 1111 is fastened to the top of the mounting base 91. The first part 105 is located in the first segment 1111. A part of the first segment 1111 protrudes beyond an outer side of the mounting base 91. In addition, the second segment 1112 is fastened to the bottom of the mounting base 91. The second part 106 is located in the second segment 1112. In some other embodiments, the first segment 1111 does not protrude beyond the mounting base 91. In the embodiment shown in FIG. 19, both the first segment 1111 and the second segment 1112 are in ring shapes. In another embodiment, both the first segment 1111 and the second segment 1112 are strip-shaped, or the first segment 1111 is in a ring shape, and the second segment 1112 is in a strip shape. In the embodiment shown in FIG. 19, a first light-emitting surface 101 includes a bottom surface of the second segment 1112, and a second light-emitting surface 102 includes an outer circumferential surface of the first segment 1111 and an outer circumferential surface of the second segment 1112. In another embodiment, a bottom surface of the second segment 1112 is a first light-emitting surface 101, and an outer circumferential surface of the first segment 1111 is a second light-emitting surface 102.

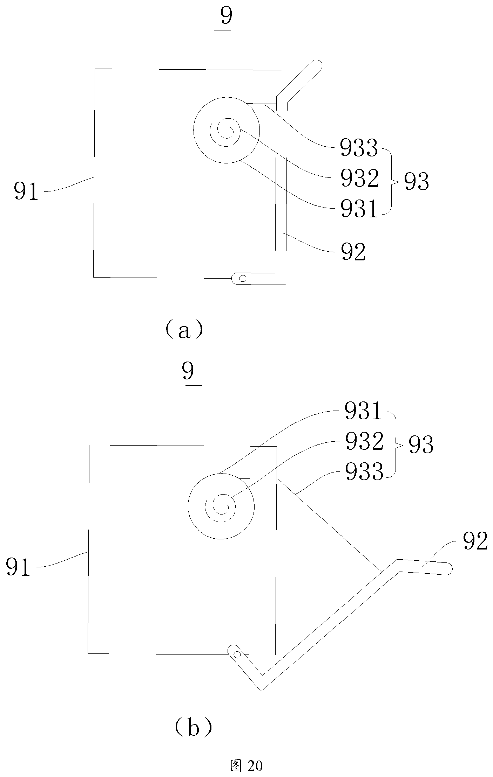

In addition, this application further provides several structures of the management assembly 9. FIG. 20A and FIG. 20B show an example of a structure of the management assembly 9. Both FIG. 20A and FIG. 20B are top views of the management assembly 9. Refer to FIG. 20A and FIG. 20B. A movable member 92 is in a rod shape. The movable member 92 is rotatably connected to (for example, connected via a hinge) the mounting base 91. The movable member 92 is further connected to the charging connector 5 or a cable 6. FIG. 14 shows a case in which the movable member 92 is connected to the cable 6. In some other embodiments, the movable member 92 may further extend downward and be connected to the charging connector 5. The movable member 92 lifts the charging connector 5 or the cable 6. In other words, the management assembly 9 can bear a part of weight of the charging connector 5 and the cable 6. This helps the user use the charging connector 5 for charging and conveniently move the cable 6. In a process in which the user pulls the charging connector 5 away, the movable member 92 changes from a state shown in FIG. 20A to a state shown in FIG. 20B. After the user returns the charging connector 5, the movable member 92 changes from the state shown in FIG. 20B to the state shown in FIG. 20A.

In an embodiment, the management assembly 9 further includes a driving member 93. The driving member 93 is fastened to the mounting base 91 and is configured to drive the movable member 92. The driving member 93 may be of any appropriate structure. For example, refer to FIG. 20A and FIG. 20B. The driving member 93 is a balancer. The driving member 93 includes a housing 931, an elastic member 932, and a connection rope 933. The housing 931 is fastened to the mounting base 91. The elastic member 932 is located in the housing 931. A part of the connection rope 933 is located in the housing 931, and the other part extends out of the housing 931. A part that is of the connection rope 933 and that is located outside the housing 931 is connected to the movable member 92. The elastic member 932 is configured to drive a part of the connection rope 933 to be wound into the housing 931.

For example, the driving member 93 further includes a winding reel. The winding reel is rotatably connected to the housing 931 (the winding reel is rotatable relative to the housing 931). The elastic member 932 is a spiral spring. The winding reel is connected to the housing 931 through the elastic member 932. A part of the connection rope 933 is wound around the winding reel. In a process in which a person pulls the charging connector 5 away, an action force applied to the winding reel is greater than an elastic force of the elastic member 932. The winding reel is rotatable in a clockwise direction under the applied force, and the movable member 92 changes from the state shown in FIG. 20A to the state shown in FIG. 20B. In a process in which the user returns the charging connector 5, after the action force applied to the winding reel disappears, or the action force applied to the winding reel is less than the elastic force of the elastic member 932, the elastic member 932 drives the winding reel to rotate in a counterclockwise direction. Driven by the driving member 93, the movable member 92 changes from the state shown in FIG. 20B to the state shown in FIG. 20A.

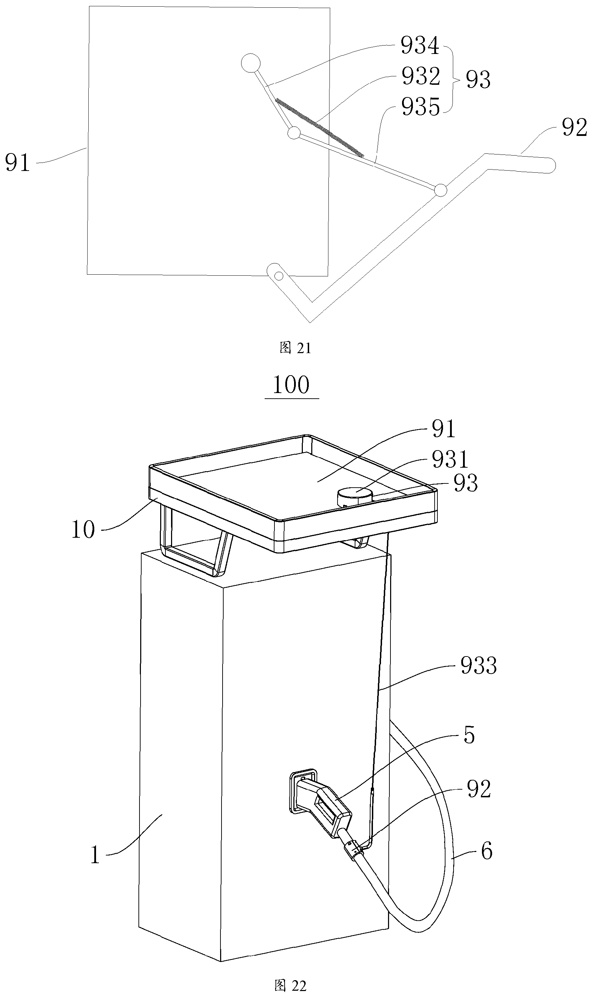

FIG. 21 shows an example of a structure of another management assembly 9. Both FIG. 21 and FIG. 20B are top views of the management assembly 9. Different from the management assembly 9 shown in FIG. 20A and FIG. 20B, a driving member 93 in FIG. 21 includes a first link 934, a second link 935, and an elastic member 932. One end of the first link 934 is rotatively connected to the mounting base 91, and the other end of the first link 934 is rotatably connected to the second link 935. One end of the second link 935 is rotatably connected to the first link 934, and the other end of the second link 935 is rotatably connected to a movable member 92. In other words, the first link 934 and the second link 935 form a two-link structure. One end of the elastic member 932 is connected to the first link 934, and the other end of the elastic member 932 is connected to the second link 935.

In a process in which a person pulls the charging connector 5 away, an action force applied to the movable member 92 is greater than an elastic force of the elastic member 932, and the movable member 92 is pulled out to a state shown in FIG. 21. In a process in which the user returns the charging connector 5, after the action force applied to the movable member 92 disappears, or the action force applied to the movable member 92 is less than the elastic force of the elastic member 932, the elastic member 932 drives the first link 934 and the second link 935 to rotate. Driven by the driving member 93, the movable member 92 rotates in a direction close to the mounting base 91.

In another embodiment, the driving member 93 may alternatively be a motor, and the driving member 93 drives the movable member 92 to rotate. In another embodiment, the driving member 93 may alternatively be an electric hoist, and the driving member 93 pulls the movable member 92 to rotate.

FIG. 22 shows an example of a structure of still another management assembly 9. Refer to FIG. 22. The management assembly 9 includes a mounting base 91, a driving member 93, and a movable member 92. The driving member 93 is a balancer (a principle of the balancer is not described herein). The movable member 92 is a clamp. A part of a connection rope 933 of the driving member 93 extends out of a housing 931 and is connected to the movable member 92. The movable member 92 is fastened to a cable 6. In some other embodiments, the movable member 92 is fastened to a charging connector 5. The management assembly 9 lifts the charging connector 5 or the cable 6, so that the management assembly 9 bears a part of weight of the charging connector 5 and the cable 6. This helps a user use the charging connector 5 for charging and conveniently move the cable 6. In a process in which the user pulls the charging connector 5 away, the connection rope 933 is removed from the housing 931 of the balancer. In a process in which the user returns the charging connector 5, the connection rope 933 is wound into the housing 931 under driving of an elastic member 932 (located in the housing 931 in FIG. 22 and obstructed by the housing 931).

In another embodiment, the movable member 92 is a telescopic rod. One end of the movable member 92 is fastened to the mounting base 91, and the other end is connected to the cable 6 or the charging connector 5. The movable member 92 can be extended or shortened. In another embodiment, the movable member 92 is a steel wire rope. One end of the movable member 92 is fastened to the mounting base 91, and the other end is connected to the cable 6 or the charging connector 5.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, comprising:
a device cabinet;
at least one charging connector, wherein the at least one charging connector is located outside the device cabinet;
at least one cable, wherein a part of each cable is located in the device cabinet, and the other part of each cable is located outside the device cabinet and is connected to one charging connector;
a management assembly, wherein the management assembly comprises a mounting base and at least one movable member, the mounting base is fastened to the top of the device cabinet, the at least one movable member is connected to the mounting base and is movable relative to the mounting base, and each movable member is connected to one charging connector or one cable; and
a light source, wherein the light source is fastened to the mounting base.

2. The charging device according to claim 1, wherein the charging device further comprises a controller, and the controller is fastened to the device cabinet or the management assembly; and
in a first time period, the controller is configured to control the light source to emit light, and in a second time period, the controller is configured to control the light source to stop emitting light.

3. The charging device according to claim 1, wherein the charging device further comprises a charging connector holder and a controller, the charging connector holder is fastened to the device cabinet or located outside the device cabinet, the charging connector holder is configured to accommodate the charging connector, and the controller is fastened to the device cabinet or the management assembly; and
when any charging connector is mounted in the charging connector holder, the controller is configured to control the light source to emit light, and when all charging connectors are removed from the charging connector holder, the controller is configured to control the light source to stop emitting light; or
when any charging connector is mounted in the charging connector holder, the controller is configured to control the light source to stop emitting light, and when all the charging connectors are removed from the charging connector holder, the controller is configured to control the light source to emit light.

4. The charging device according to claim 1, wherein the light source is configured to emit first light and second light of different colors;
the charging device further comprises a charging connector holder and a controller, the charging connector holder is fastened to the device cabinet or located outside the device cabinet, the charging connector holder is configured to accommodate the charging connector, and the controller is fastened to the device cabinet or the management assembly; and
when any charging connector is mounted in the charging connector holder, the controller is configured to control the light source to emit the first light, and when all the charging connectors are removed from the charging connector holder, the controller is configured to control the light source to emit the second light.

5. The charging device according to claim 4, wherein the light source is further configured to emit third light, and both a color of the first light and a color of the second light are different from a color of the third light; and
in a first time period, the controller is configured to control the light source to emit the third light, and in a second time period, the controller is configured to control the light source to turn off the third light.

6. The charging device according to claim 5, wherein the light source comprises at least one first part and at least one second part, the at least one first part is configured to emit the first light and the second light, and the at least one second part is configured to emit the third light.

7. The charging device according to claim 6, wherein a plurality of first parts and a plurality of second parts are disposed, and the plurality of first parts and the plurality of second parts are alternately arranged in a circumferential direction of the device cabinet.

8. The charging device according to claim 6, wherein a plurality of first parts are disposed, the plurality of first parts surround an outer circumference of the at least one second part, and an area enclosed by the plurality of first parts faces the device cabinet.

9. The charging device according to claim 6, wherein the at least one first part is located above the at least one second part.

10. The charging device according to claim 9, wherein the at least one first part is located at the top of the mounting base, and the at least one second part is located at the bottom of the mounting base.

11. The charging device according to any one of claims 1 to 10, wherein the charging device further comprises:
a sensor, wherein the sensor is fastened to the device cabinet or the management assembly, and the sensor is configured to detect brightness outside the device cabinet; and
the controller, wherein the controller is fastened to the device cabinet or the management assembly, and the controller is configured to control brightness of the light source, wherein
when the brightness outside the device cabinet is less than a first brightness threshold, the controller is configured to control the brightness of the light source to decrease, and when the brightness outside the device cabinet is greater than a second brightness threshold, the controller is configured to control the brightness of the light source to increase.

12. The charging device according to any one of claims 1 to 11, wherein the charging device further comprises a light source cover, the light source is located in the light source cover, the bottom of the light source cover has a first light-emitting surface, and the first light-emitting surface is configured to allow light emitted by the light source to pass through.

13. The charging device according to any one of claims 1 to 12, wherein the charging device further comprises the light source cover, the light source is located in the light source cover, the light source cover is in a ring shape, an opening enclosed by the light source cover faces the device cabinet, the light source cover has a second light-emitting surface facing away from the opening, and the second light-emitting surface is configured to allow the light emitted by the light source to pass through; or the light source cover has a third light-emitting surface facing the opening, and the third light-emitting surface is configured to allow the light emitted by the light source to pass through.

14. The charging device according to claim 12 or 13, wherein the light source cover is fastened to the bottom of the mounting base, and the first light-emitting surface faces the device cabinet.

15. The charging device according to claim 12 or 13, wherein the light source cover is fastened to the top of the mounting base, a part of the light source cover protrudes beyond an outer circumference of the mounting base, and the first light-emitting surface is located at the part that is of the light source cover and that protrudes beyond the outer circumference of the mounting base.
